(19) Europäisches Patentamt
European Patent Office
Office européen des brevets

(11) Veröffentlichungsnummer: **0 489 322 A2**

# (12) EUROPÄISCHE PATENTANMELDUNG

(21) Anmeldenummer: **91120004.6**

(22) Anmeldetag: **23.11.91**

(51) Int. Cl.[5]: **C08G 65/32**, C10L 1/22

(30) Priorität: **06.12.90 DE 4038913**

(43) Veröffentlichungstag der Anmeldung: **10.06.92 Patentblatt 92/24**

(84) Benannte Vertragsstaaten: **BE DE FR GB IT NL**

(71) Anmelder: **BASF Aktiengesellschaft**
**Carl-Bosch-Strasse 38**
**W-6700 Ludwigshafen(DE)**

(72) Erfinder: **Oppenlaender, Knut, Dr.**
**Otto-Dill-Strasse 23**
**W-6700 Ludwigshafen(DE)**
Erfinder: **Mohr, Juergen, Dr.**
**Hochgewanne 48**
**W-6718 Gruenstadt(DE)**
Erfinder: **Schwen, Roland, Dr.**
**Im Schlossgarten 7**
**W-6701 Friedelsheim(DE)**
Erfinder: **Thomas, Juergen, Dr.**
**Merowinger Strasse 5**
**W-6701 Fussgoenheim(DE)**

## (54) Alkoxylierte Polyetherdiamine, Verfahren zu ihrer Herstellung und Kraftstoffe für Ottomotoren, die diese enthalten.

(57) Neue alkoxylierte Polyetherdiamine und ihre Verwendung als Zusatz zu Kraftstoffen für Ottomotoren als Additive zur Vergaserreinhaltung, Ventilreinigung und für Schmierstoffe.

EP 0 489 322 A2

Die Erfindung betrifft neue ethoxylierte, propoxylierte und butoxylierte Polyetherdiamine sowie Kraftstoffe für Ottomotoren, die geringe Mengen davon enthalten.

Vergaser und Einlaßsystem von Ottomotoren, aber auch Einspritzsysteme für die Kraftstoffdosierung in Otto- und Dieselmotoren, werden in zunehmendem Maße durch Verunreinigungen belastet, die durch Staubteilchen aus der Luft, unverbrannte Kohlenwasserstoffreste aus dem Brennraum und die in den Vergaser geleiteten Kurbelwellengehäuseentlüftungsgase verursacht werden.

Diese Rückstände verschieben das Luft-Kraftstoffverhältnis im Leerlauf und im unteren Teillastbereich, so daß das Gemisch fetter, die Verbrennung unvollständiger und wiederum die Anteile unverbrannter oder teilverbrannter Kohlenwasserstoffe im Abgas größer werden und der Benzinverbrauch steigt.

Es ist bekannt, daß zur Vermeidung dieser Nachteile Kraftstoffadditive zur Reinhaltung von Ventilen und Vergaser bzw. Einspritzsystemen verwendet werden (vgl. z.B. M. Rossenbeck in Katalysatoren, Tenside, Mineralöladditive, Hrsg. J. Falbe, U. Hasserodt, S. 223 f., G. Thieme Verlag, Stuttgart 1978).

Je nach Wirkungsweise, aber auch nach dem bevorzugten Wirkort solcher Detergent-Additive, unterscheidet man heute zwei Generationen.

Die erste Additiv-Generation konnte nur die Bildung von Ablagerungen im Ansaugsystem verhindern, nicht aber bereits vorhandene Ablagerungen wieder entfernen, wohingegen die modernen Additive der zweiten Generation beides bewirken können ("keep-clean-" und "clean-up-Effekt") und zwar, aufgrund veränderter thermischer Eigenschaften, auch an Zonen hoher Temperaturen, nämlich an den Einlaßventilen.

Eine weitere Anforderung besteht in der möglichst positiven Beeinflussung des Schmierstoffs durch Kraftstoffadditive, die in geringer Menge, aber stetig, über den Brennraum in den Schmiermittelkreislauf eines Motors gelangen.

Das molekulare Bauprinzip von Kraftstoff-Detergenzien kann verallgemeindernd angegeben werden als Verknüpfung polarer Strukturen mit meist höhermolekularen, unpolaren oder lipophilen Resten.

Vertreter der zweiten Additiv-Generation sind z.B. Produkte auf der Basis von Polyisobutenen im unpolaren Molekülteil, wobei Additive vom Polyisobutylamin-Typ besonders gute Eigenschaften aufweisen.

Produkte dieser Art zeigen meist eine ausgezeichnete Wirksamkeit in der Ventil- und Vergaserreinhaltung, verhalten sich jedoch allenfalls neutral, d.h. ohne nachteilige Wirkung auf einen Motorschmierstoff, zeigen also keinen positiven Effekt hinsichtlich einer erwünschten Schlammdispergierung.

Andererseits werden Dispergatoren meist über Verfahrenswege hergestellt, die in einer Stufe organische Chlorverbindungen erfordern.

Eine chlorfreie Alternative stellen Hydroformylierung und Folgereaktionen an Polyisobutenen dar.

Durch die Hydroformylierung wird, je nach gewählten Bedingungen, an einem olefinischen Ausgangsprodukt eine Carbonyl- oder Alkoholfunktionalität erzeugt.

Polyglykolderivate besitzen von Natur aus endständige Alkohol-Funktionalitäten.

Es bestand daher die Aufgabe, ausgehend von geeigneten Polyglykolen oder deren Derivaten, über Folgereaktionen zu wirksamen Produkten zu gelangen.

Diese Aufgabe wurde gelöst mit alkoxylierte Polyetherdiaminen der Formel I

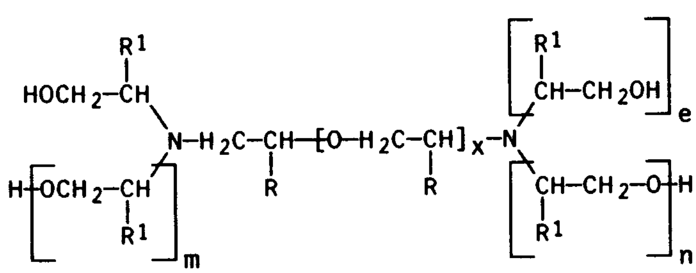

I,

in der R und $R^1$ unabhängig voneinander Wasserstoff, Methyl oder Ethyl, e, m und n die Zahlen 0 oder 1 und x die Zahlen 10 bis 50 bedeuten, wobei solche bevorzugt sind, bei denen R und $R^1$ Wasserstoff oder Methyl bedeuten.

Die neuen alkoxylierten Polyetherdiamine werden erhalten, indem ein Polyglykol der Formel II

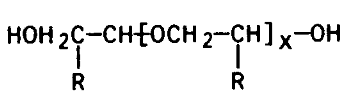

II

hydrierend aminiert und mit 1 bis 5 Mol Ethylenoxid, Propylenoxid oder Butylenoxid alkoxyliert wird.

Das verwendete Polyglykol (II), vorzugsweise Polypropylenglykol, hat ein Molekulargewicht zwischen 500 und 5000, vorzugsweise zwischen 800 und 2500. Es wird nach bekanntem Verfahren durch basenkatalysierte Polymerisation von Alkoxiden, insbesondere Propylenoxid erhalten. Die endständigen Hydroxylgruppen werden dann nach bekannten Verfahren, wie sie z.B. in DE-OS 36 11 230 beschrieben sind und worauf hiermit Bezug genommen wird, zum Diamin reduktiv aminiert.

Die Mono- bis Tetraalkoxilierung erfolgt durch Umsetzung des Diamins mit Alkylenoxiden, vorzugsweise mit Ethylenoxid oder Propylenoxid nach an sich bekannter Art und Weise, indem man z.B. das Amin in Anwesenheit eines gewissen Anteils an Wasser in einem Druckgefäß mit der ca. 1- bis 5fach molaren Menge an Alkylenoxid zur Reaktion bringt wie dies z.B. bei S.P. McManus u.a., Synth. Commun. 3, 177 (1973) beschrieben ist. Dabei erhält man je nach Wahl der Alkoxidmenge mono- bis tetraalkoxilierte Amine.

Überraschenderweise verfügen die Alkoxilierungsprodukte der Formel I über sehr gute ventilreinigende Eigenschaften, während die nichtalkoxilierten Ausgangsamine hier nicht wirken.

Als Kraftstoffe für Ottomotoren kommen verbleites und unverbleites Normal- und Superbenzin in Betracht. Die Benzine können auch andere Komponenten als Kohlenwasserstoffe, z.B. Alkohole wie Methanol, Ethanol, tert. Butanol sowie Ether, z.B. Methyltertiärbutylether, enthalten. Neben den erfindungsgemäß zu verwendenden alkoxylierten Polyetheraminen enthalten die Kraftstoffe in der Regel noch weiter Zusätze wie Korrosionsinhibitoren, Stabilisatoren, Antioxidantien und/oder weitere Detergenzien.

Korrosionsinhibitoren sind meist Ammoniumsalze org. Carbonsäuren, die durch entsprechende Struktur der Ausgangsverbindungen zur Filmbildung neigen. Auch Amine zur Absenkung des pH-Wertes finden sich häufig in Korrosionsinhibitoren. Als Buntmetallkorrosionsschutz werden meist heterocyclische Aromaten eingesetzt.

Als Antioxidantien oder Stabilisatoren sind insbesondere Amine wie para-Phenylendiamin, Dicyclohexylamin, Morpholin oder Derivate dieser Amine zu nennen. Auch phenolische Antioxidantien wie 2,4-di-tert.-Butyl-phenol oder 3,5-Di-tert.-butyl-4-hydroxiphenylpropionsäure und deren Derivate werden Kraft- und Schmierstoffen zugesetzt.

Als weitere Vergaser-, Injector- und Ventildetergents sind ferner gegebenenfalls Amide und Imide des Polyisobutylenbernsteinsäureanhydrids, Polybutenpolyamine sowie langkettige Carbonamide und -imide in den Kraftstoffen enthalten.

Die Prüfung der Produkte auf ihre Eignung als Kraftstoffadditive erfolgte mittels Motorentest:

Nach CEC-F-02-T-79 wurde die Wirkung als Ventilreiniger getestet.

Beispiele

a) Ethoxylierung von Polyetherdiamin

400 g (ca. 0,2 mol) eines Polyetherdiamins, hergestellt aus Propylenglykol einer mittleren Molmasse von ca. 2000, werden zusammen mit 20 ml Wasser (ca. 5 Gew.-% bezogen auf den Ansatz) in einem $V_2A$-Rührautoklaven vorgelegt.

Bei einer Innentemperatur von 90 bis 100 ° C und einem maximalen Druck von 6 bar werden während 30 Minuten 22 g (0,5 mol) Ethylenoxid eingegast, nach beendeter Zugabe wird noch 3 Stunden nachgerührt.

Danach entfernt man flüchtige Bestandteile unter vermindertem Druck möglichst vollständig und isoliert das Alkoxylat als viskoses hellgelbes Öl.

b) Propoxylierung von Polyetherdiamin

400 g (ca. 0,2 mol) eines Polyetherdiamins, hergestellt aus Propylenglykol einer mittleren Molmasse von ca. 2000, werden zusammen mit 20 ml Wasser (ca. 5 Gew.-% bezogen auf den Ansatz) in einem $V_2A$-Rührautoklaven vorgelegt.

Bei einer Innentemperatur von 110 bis 120 ° C und einem maximalen Druck von 6 bar werden während 30 Minuten 29 g (0,5 mol) Propylenoxid eingegast, nach beendeter Zugabe wird noch 3 Stunden nachgerührt.

Danach entfernt man flüchtige Bestandteile unter vermindertem Druck möglichst vollständig und isoliert das Alkoxylat als viskoses hellgelbes Öl.

c) Butoxylierung von Polyetherdiamin

400 g (ca. 0,2 mol) eines Polyetherdiamins, hergestellt aus Propylenglykol einer mittleren Molmasse von ca. 2000, werden zusammen mit 20 ml Wasser (ca. 5 Gew.-% bezogen auf den Ansatz) in einem $V_2$A-Rührautoklaven vorgelegt.

Bei einer Innentemperatur von 120 bis 130 ° C und einem maximalen Druck von 6 bar werden während 30 Minuten 33 g (0,45 mol) Butylenoxid eingegast, nach beendeter Zugabe wird noch 3 Stunden nachgerührt.

Danach entfernt man flüchtige Bestandteile unter vermindertem Druck möglichst vollständig und isoliert das Alkoxylat als viskoses hellgelbes Öl.

d) Ergebnisse der Motortests

Prüfungen als Ventilreiniger

| Produkt | Ablagerungen [mg]* Ventil-Nr. | | | |
|---|---|---|---|---|
| | 1 | 2 | 3 | 4 |
| Polyisobutylamin nach DE-Al-3 611 230 | 15 | 0 | 0 | 10 |
| Ethoxiliertes Poly-etheramin gemäß (a) | 40 | 0 | 6 | 0 |
| Propoxyliertes Poly-etheramin gemäß (b) | 12 | 1 | 0 | 6 |
| Butoxyliertes Poly-etheramin gemäß (c) | 41 | 0 | 3 | 9 |
| Polyetheramin-Ausgangs-produkt zu (a) - (c) | 259 | 190 | 800 | 95 |

* nach CEC-F-02-T-79

**Patentansprüche**

1. Alkoxylierte Polyetherdiamine der Formel I

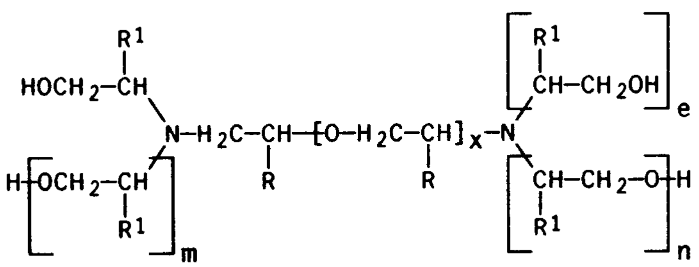

I,

in der R und $R^1$ unabhängig voneinander Wasserstoff, Methyl oder Ethyl, e, m und n die Zahlen 0 oder 1 und x die Zahlen 10 bis 50 bedeuten.

2. Alkoxylierte Polyetherdiamine der Formel I gemäß Anspruch 1, in der R und $R^1$ Wasserstoff oder Methyl bedeuten.

3. Verfahren zur Herstellung von alkoxylierten Polyetherdiaminen der Formel I gemäß Anspruch 1, dadurch gekennzeichnet, daß man ein Polyglykol der Formel II

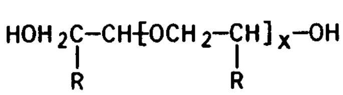

II

in der R und x die in Anspruch 1 angegebenen Bedeutungen haben, hydrierend aminiert und mit 1 bis 5 Mol Ethylenoxid, Propylenoxid oder Butylenoxid alkoxyliert.

4. Kraftstoffe für Ottomotoren enthaltend geringe Menge von alkoxylierten Polyetherdiaminen der Formel I gemäß Anspruch 1.

**5.** Kraftstoffe gemäß Anspruch 4, dadurch gekennzeichnet, daß sie 50 bis 5000 ppm der Verbindungen der Formel I enthalten, in der $R^1$ Wasserstoff oder Methyl bedeutet.